**Europäisches Patentamt**

**European Patent Office**

**Office européen des brevets**

(19)

(11) Veröffentlichungsnummer: **0 359 309 B1**

(12) **EUROPÄISCHE PATENTSCHRIFT**

(45) Veröffentlichungstag der Patentschrift :
06.11.91 Patentblatt 91/45

(51) Int. Cl.⁵ : **E04B 2/74, E04B 1/61**

(21) Anmeldenummer : **89202230.2**

(22) Anmeldetag : **04.09.89**

(54) **Verbundmittel für plattenförmige Isolierwände.**

(30) Priorität : **15.09.88 NL 8802268**

(43) Veröffentlichungstag der Anmeldung :
**21.03.90 Patentblatt 90/12**

(45) Bekanntmachung des Hinweises auf die
Patenterteilung :
**06.11.91 Patentblatt 91/45**

(84) Benannte Vertragsstaaten :
**AT BE CH DE ES FR GB IT LI NL SE**

(56) Entgegenhaltungen :
**FR-A- 2 178 353**
**GB-A- 723 676**
**GB-A- 1 136 795**

(73) Patentinhaber : **Willems, Johannes Maria**
**Dennenlaan 52**
**NL-4849 BE Dorst (N.B.) (NL)**

(72) Erfinder : **Willems, Johannes Maria**
**Dennenlaan 52**
**NL-4849 BE Dorst (N.B.) (NL)**

(74) Vertreter : **Siemens, Andreas Meinhard**
**Ernest, Dipl.-Ing.**
**SIEMENS & CIE. Roskam 8**
**NL-4813 GZ Breda (NL)**

## Beschreibung

Die vorliegende Erfindung bezieht sich auf Verbundmittel und Teile derselben für Wände, welche aus wärmeisolierenden Platten bestehen, insbesondere jedoch nicht ausschliesslich für isolierende Wandplatten von Transportmitteln für gekühlten Transport von Lebensmitteln und anderer verderblicher Ware.

Für feste Kühllagerräume und Gefrierzellen können verschiedene kalorisch isolierende Materialien als Bauelemente verwendet werden.

Dabei sollen nur der Durchgang von Leitungen, die Belüftung und die Tür besonderen Anforderungen zur Vermeidung von Wärmelecken genügen, wobei die Wände an sich für den Fachmann keine Probleme entstehen lassen ; dies ist jedoch anders bei Vorrichtungen für gekühlten Transport, weil die mobile Kühlvorrichtung ein bedeutendes Gewicht hat und die isolierenden Wände mit einem Minimum an isolierendem Material und so leicht wie möglich konstruiert werden müssen.

Ausserdem fahren die gekühlten Lastkraftwagen durch Gebiete mit unterschiedlichem Klima und meteorologischen Verhältnissen, wobei die isolierende Wand trotz der sich während der Reise ändernden Temperaturen doch immer den Inhalt auf die geforderte niedrige Temperatur halten muss.

An den mobilen Kühlraum werden daher Forderungen gestellt, denen schwieriger zu genügen ist als denen für feste Kühlräume.

Natürlich ist eine perfekte Konstruktion für mobile Kühlräume auch für feste oder vorübergehend aufstellbare Konstruktionen geeignet.

Der Kühlraum sowohl ortsfesten wie mobilen Typs bildet ein isoliertes thermodynamisches System in welchem ein Gleichgewicht herrscht.

Der Idealzustand wäre dabei der adiabatische, also ein abgeschlossenes System ohne Wärmeaustausch.

Darin soll der K-Wert, das Verhältnis der isobaren zur isochoren Wärmekapazität dem Idealwert möglichst genähert werden.

Für das Isolationsmaterial der Wände ist dieses Problem gelöst, da isolierende Materialien existieren, die eine sehr geringe Wärmeleitfähigkeit zeigen und gleichwohl ein geringes spezifisches Gewicht besitzen. Diese beiden Eigenschaften in Kombination sind selbstverständlich für jede Isolationswand günstig, indessen für mobile Vorrichtungen wie Lastkraftwagen und Anhänger von ganz besonderer Bedeutung.

Für diese Anwendung wird jedoch auch noch gefordert, dass die Konstruktion schwere dynamische Belastungen aushalten kann.

Man verwendet deshalb Platten aus Schaumkunststoffen, wie Polyurethanschaum mit geschlossenen Zellen (Vakuolen), die zwischen Platten aus Aluminium, Stahl oder faserverstärktem Polyester in einer Mehrschichtkonstruktion angebracht sind.

Ueber die Oberfläche dieser Karrosseriebleche wird die Wärmeleitung von aussen nach innen in möglichst optimaler und zweckmässiger Weise unterbunden. Die Platten, die aus einem Aussen- und Innenprofil mit Schaumkunststofffüllung dazwischen bestehen, müssen jedoch miteinander verbunden sein, und müssen beispielsweise bei Reparatur von erlittenem Schaden auch ersetzt werden können.

Die Verbindung zwischen diesen Platten darf also nicht verleimt sein. Sie muss jedoch mechanisch fest und völlig abdichtend gegen Feuchtigkeit sein.

Uebliche Verbindungsteile welche im Bau für Wandteile verwendet werden, besitzen den Nachteil, dass die Naht zwischen aneinander angebrachten Platten eine Wärmeleitung besitzt, die zu hoch ist.

Ausserdem ist diese Temperpaturabhängig, sodass der Wärmeübergang bei steigender Temperatur immer mehr steigt.

Ein derartiges Verbindungssystem für Plattenmaterial ist im Europäischen Patent 0051351 beschrieben.

Darin wird vorgeschlagen, Platten für ein Bausystem mittels zweier einfacher Leisten zusammen zu halten, welche mit durchgehenden Schrauben oder Mutterbolzen mit einander verbunden sind, wobei der Schraubenkopf oder Bolzen durch eine in Aussparungen geklemmte Abdeckleiste bedeckt ist. Wärmeübergang ist dabei nicht völlig ausgeschlossen.

Ausserdem kann die Klemmleiste sich lösen, weil sie nicht gesichert ist. In der französischen Patentschrift 2178353 ist eine Verbindung für Klemmverbundmittel bei Bauplatten beschrieben, wobei die Klemmflügel durch eine Schraube festgedreht werden.

Auch bei dieser ist Wärmeübergang durch die Verbindung möglich.

Auch ist der Verbund nicht glatt.

Es wurde nun angestrebt ein Verbindungssystem insbesondere für Kühlräume zu entwickeln, das keine wärmeleitenden Metallverbindungen zwischen Aussen- und Innenseite besitzt, leicht zu montieren ist, vielseitig angewandt werden kann, die erforderliche Stabilität und Elastizität sowohl für mobile als auch für ortsfeste Anwendungen besitzt, und an Innen- und Aussenseite völlig flach und glatt, ohne irgendwelche herausragenden Teile montiert ist. Die Wärmeleitung durch Verbindungsmittel soll so gering wie möglich sein, sodass das isolierende Material keine wärmeleitenden "Brücken" umfasst. Die Wärmeleitung von Stahl und Aluminium ist bekanntlich erheblich und obendrein bei tieferer Temperatur höher als bei normaler Temperatur. Der Wärmeleitungskoeffizient wird für einige Materialien in der folgenden Tabelle angegeben :

Wärmeleitungskoeffizient $\kappa$ (x10$^3$, bei 15°C) :

| Aluminium : | 2.5 |
|---|---|
| Hartgummi : | 1.5 |
| Vermikulit : | 1.25 |
| Kork : | 0.40 |
| Glaswolle : | 0.40 |
| Schaumpolyurethan : | 0.25. |

Das Aufbausystem besteht aus doppelwandigen isolierenden Platten, die mittels eines speziellen Kupplungsprofiles verbunden werden können.

Gemäss der vorliegenden Erfindung wird der Wärmedurchgang auf dem Verbund zwischen an einander stossenden doppelwandigen Isolationsplatten völlig unterbunden, während die Montagemöglichkeiten, die Stabilität und Elastizität, und die Beständigkeit gegen Feuchtigkeit und Wettereinflüsse erhalten bleiben. Bei Beschädigung können die Platten leicht und schnell ausgewechselt werden.

Das Verbindungsmittel, welches aus Metallleisten besteht, die an der Aussenseite glatt und an der Innenseite profiliert sind, zwecks dicht abschliessendem und gut isolierendem Verbund von doppelwandigen Platten, ist dadurch gekennzeichnet, dass die Leisten für die Aussen- und die Innenseite dieselbe Form haben und mittels eingeklemmter Kautschuk-Abdichtungsborten an den sich verjüngenden kopfseitigen Kanten der Platten befestigt sind, wobei jede der kopfseitigen Kanten der Platten mit einem von den Borten gehaltenen streifenförmigen Kunststoffpuffer versehen ist, und dazwischen ein H-förmiger Kunststoffzwischenteil geklemmt ist, in welchem sich eine versenkte Schraube von der Aussenseite her nur soweit erstreckt, dass da keine durchgehende metallische Verbindung zwischen der Aussenseite und der Innenseite der Platten oder zwischen den profilierten Leisten besteht.

Durch diese Konstruktion des Verbindungsmittels kann keine Wärmeleitung von einiger Bedeutung an der Naht zwischen der Länge nach an ein anderstossend aufgestellten Platten stattfinden, sodass Energie eingespart wird und die geforderte Temperatur im Laderaum besser aufrecht erhalten werden kann.

Trotzdem kann zum Beispiel bei Beschädigung einer Platte auf einfache Weise eine neue Platte eingebaut werden.

Auch die Flexibilität und Stabilität können allen gestellten Forderungen genügen.

Die Platten mit den Verbundprofilen können deshalb auch gut in Baukonstruktionen angewendet werden, wie Wärmetunnel, ortsfeste Kühlräume, versetzbare Container, Lager- und Lebensmittelräume in Gast- und Erholungsbetrieben.

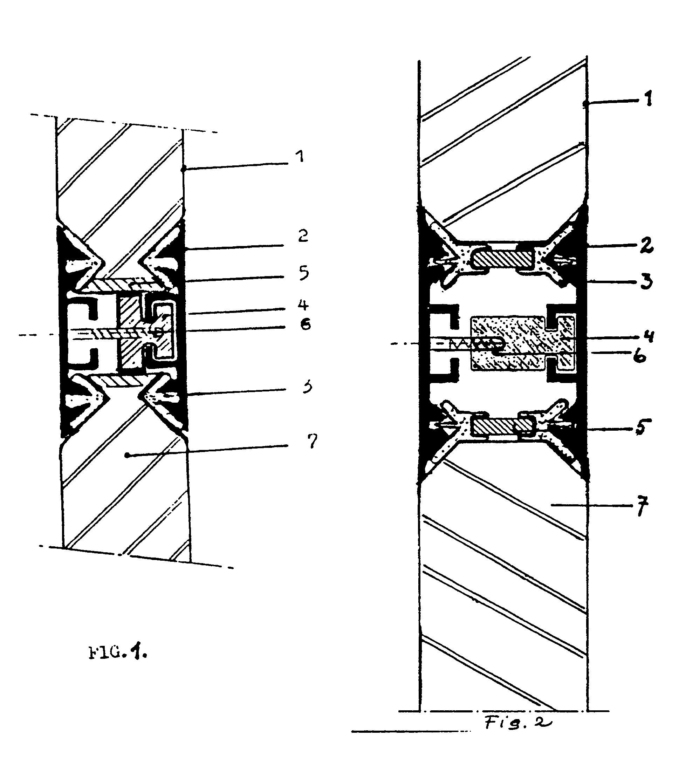

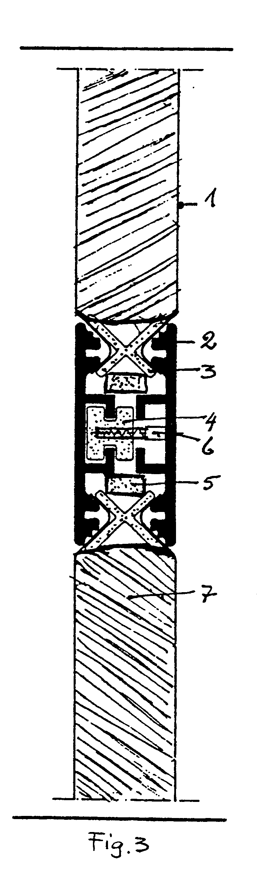

Die vorliegende Erfindung wird näher erläutert an Hand der beigefügten Figuren 1, 2 und 3, die Verkörperungen der Erfindung darstellen.

In diesen Figuren sind senkrechte Schnitte von Verbindungsarten zweier doppelwandiger isolierender Platten aus Metallblechen mit thermischer Isolierung zwischen den Blechen dargestellt.

Es sind Einheiten verschiedener Wandstärke gezeichnet.

In diesen Figuren stellt

(1) eine isolierende Doppelwandplatte mit Verjüngung am kopfseitigen Rand dar.

(2) ist eine innenseitig profilierte Metallleiste, auf welche die Abdichtungsborte (3) passt.

(3) ist die Kautschuk-Abdichtungsborte, die auf die Metallleiste (2) passt.

(4) ist ein klemmendes H-förmiges Kunststoff-Zwischenteil, das eine vollständige thermische Unterbrechung zwischen den beiden metallischen Profilteilen bildet (aus Polyamid oder Polyurethan).

(5) ist ein kopfseitig auf den Plattenrand montierter Kunststoffpuffer welcher einer stabilen Klemmung unterworfen ist.

(6) ist eine versenkte Schraube, die sich vom einen Profilteil (2) in das klemmende H-förmige Kunststoff-Zwischenteil (4) hinein erstreckt.

(7) gibt eine Polyurethanschaum-Isolations-füllungsmasse an. Die Verbundkopplung ist versunken, völlig flach und nagellos.

Die Platten (1) sind thermisch isoliert hinsichtlich der profilierten Leiste (2) durch die Kautschuk-Abdichtungsborte (3).

Die Platten (1) sind ausserdem völlig in Bezug auf die versenkte Schraube (6) isoliert, die mittels des H-förmigen Kunststoff-Zwischenteils (4) zur Befestigung der profilierten Leiste (2) dient.

Die Blechwand kann aus Stahlblech oder Aluminium oder aus anderem Material, wie glasfaserverstärktem Polyester bestehen, und falls erwünscht lackiert werden.

Durch diesen Aufbau ist die Verbindung zwischen zwei Platten völlig dicht und stabil, doch besitzt keine durchgehende wärmeleitende Teile ; sie besitzt eine gewisse Elastizität und lässt die Möglichkeit zu einiger Expansion beziehungsweise Schrumpfung als Folge auftretender Temperaturunterschiede bestehen, ohne dass die Abdichtung dadurch beeinflusst würde. Die Kanten der Platten sind dabei gegen Schaden auch während der Montage gut geschützt.

Die Ausführung der isolierenden Platten mit erfindungsgemässen Verbundprofilen ist besonders für die Laderäume von Lastkraftwagen und gekühlten Sattelanhängern, Containern, Kühlabteilungen und Kühlzellen auf Schiffen, Eisenbahn und in Flugzeugen geeignet.

Sie kann wie beschrieben ebenso angewandt werden zur Isolation von Räumen in Gebäuden, wobei die Vielseitigkeit in der Konstruktion einen Vorteil bietet.

Der Zusammenbau der Isolationswände kann ohne Spezialgeräte leicht zu kleineren oder grösseren Einheiten geändert werden.

Ueblich Einheiten haben Abmessungen von zum Beispiel 13 m × 3 m, wozu dann Norm-Isolierplatten von 1.25 m × 3 m zusammengebaut werden.

Seitentüren und das Dach können aus denselben Platten mit dem erfindungsgemässen Verbundsystem erstellt werden.

Die Konstruktion erfüllt die Forderungen hinsichtlich Wärmeleitung gemäss DIN 4108.

Der Polyurethanschaum ist schwer entflammbar, Klasse B1 nach DIN 4102.

Die Isolation mit dem beschriebenen Material ist ausser gegen Wärmeübertragung auch zweckmässig als akustische Isolierung, da die Platten und die Verbindungen auch Geräusch-und Schwingungsabsorbierende Eigenschaften besitzen. Ein grosser Vorteil ist auch das geringe Eigengewicht und die Möglichkeit, jede Platte einer Wand bei Beschädigung schnell und leicht um zu tauschen gegen eine neue Platte.


## Patentansprüche

1. Verbindungsmittel welches aus metallischen an der Aussenseite glatten und an der Innenseite profilierten Leisten (2) besteht, für das dicht abschliessend und isolierend zusammenfügen von doppelwandigen Platten (1) mit einer Füllung von wärmeisolierendem Material (7), für mobile oder ortsfeste Kühlräume, dadurch gekennzeichnet, dass die Leisten (2) für die Aussen- wie für die Innenseite dieselbe Form besitzen, und mittels eingeklemmter Kautschuk-Abdichtungsborten (3) an verjüngenden kopfseitigen Kanten der Platten (1) befestigt sind, wobei die kopfseitigen Kanten der Platten (1) jeweils mit einem von den Borten gehaltenen streifenförmigen Kunststoffpuffer versehen sind, zwischen denen ein H-förmiges Kunststoffzwischenteil (4) geklemmt ist, in welchem Zwischenteil (4) eine versenkte Schraube (6) von der Aussenseite her soweit hineinragt, dass es weder eine durchgehende metallische Verbindung zwischen der Aussen- und der Innenseite der Platten (1) noch zwischen den profilierten Leisten (2) gibt.

2. Doppelwandplatte (1) mit einer Füllung von wärmeisolierendem Material (7), gekennzeichnet durch Verjüngung an den kopfseitigen Kanten entlang, auf welche die Kautschuk-Abdichtungsborten (3) passen.

3. Doppelwandplatten mit Verbindungsmittel gemäss Anspruch 1 oder 2, dadurch gekennzeichnet, dass die Füllung aus wärme-isolierendem Material von aufgeschäumtem Polyurethanharz besteht.

4. Mobiler Kühlbehälter, bestehend aus Doppelwandplatten (1) mit einer Füllung von gegen Wärme isolierendem Material (7), dadurch gekennzeichnet, dass diese Platten (1) verbunden sind mit Verbindungsmitteln gemäss Anspruch 1.

5. Karrosserie für Liefer-und Lastwagen, die mit isolierendem Wandsystem versehen sind, dadurch gekennzeichnet, dass das Wandsystem aus Isolationsplatten besteht die mittels eines isolierenden Verbundmittels gemäss Anspruch 1 oder 2 innen- und aussenseitig völlig flach verbunden sind.


## Claims

1. Connecting device, consisting of metallic strips (2), which are smooth at outer side and profilated at inner side, for tightening and insulating connection of double-wall plates (1), with a padding of heat-insulating material (7), for mobile or stationary cooling capacities, characterized in that the strips (2) for the outer as well for the inner side have identical shapes, and are fixed at conical end ridges of the plates (1) by means of clamped rubber sealing gaskets (3), whereas said end ridges of the plates (1) are provided with a plastic strip-shaped buffer, kept by said gaskets (3), between which a H-shaped plastic interposed part (4) is clamped, and into said interposed part (4) a countersunk screw (6) is entering from the outer side only so far, that there exist neither a metallic connection passage between the outer and the inner side of the plates (1) nor between the profilated strips (2).

2. Double-wall plate (1) with a padding of heat-insulating material (7), characterized by conical ends at their head ridges, whereupon the rubber sealing gaskets (3) are matching.

3. Double-wall plates with connecting means according to claim 1 or 2, characterized in that the padding consists of a heat-insulating material of foamed polyurethane resin.

4. Mobile refrigerated container, comprising double-wall plates (1), with a padding of heat-insulating material (7), characterized in that said plates (1) are connected by means of connecting devices according to claim 1.

5. Body for delivery and cargo trucks provided with an insulating wall system, characterized in that that wall system consists of insulating plates which are connected by means of an insulating device according to claim 1 or 2 in an entirely flat manner at the inner and the outer side.

**Revendications**

1. Dispositif d'assemblage, se composant de couvre-joints (2) métalliques lisses au côté extérieur et profilés au coté intérieur, pour assembler comme obturateur étanche et isolant de plâques (1) à double parois, munies d'un bourrage d'un matériau calorifuge (7), pour des espaces frigorifiques mobiles ou stationnaires, caractérisé en ce que les couvre-joints (2) pour le côté extérieur ainsi que pour le côté intérieur soient de la même forme, et qu'ils soient fixés aux bords chanfreinés au bout des plâques (1) par profils d'étanchéité de caoutchouc (3) encastrés, et que chaque desdits bords aboutissants des plâques (1) est muni d'un tampon plastique, retenu par lesdits profils d'étanchéité (3), entre lesquels un entre-deux plastique (4) de forme "H" est serré, dans quel entre-deux (4) une vis enfoncée (6) s'étend de l'extérieur jusqu'à ce qu'il n'existe ni raccordement métallique ininterrompu entre les côtés extérieurs et intérieurs des plâques (1) ni entre les couvre-joints (2).

2. Une plâque (1) à double parois, munie d'un bourrage d'un matériau calorifuge (7), caractérisée par des bouts chanfreinés, sur lesquels les profils d'étanchéité de caoutchouc (3) s'ajustent.

3. Plâques à double parois avec un dispositif d'assemblage d'après les revendications 1 ou 2, caractérisées en ce que le bourrage de matériau calorifuge consiste en mousse de résine de polyuréthane.

4. Conteneur frigorifique mobile, consistant en plâques (1) à double parois, munies d'un bourrage d'un matériau calorifuge (7), caractérisé en ce que lesdites plâques (1) sont assemblées par des dispositifs d'assemblage selon la revendication 1.

5. Une carrosserie pour voitures de livraison et pour camions, pourvues d'un système de parois isolants, caractérisée en ce que ledit système de parois consiste en plâques isolantes assemblées par un dispositif d'assemblage isolant d'une surface totalement lisse au côté intérieur et extérieur selon la revendication 1 ou 2.

FIG.1.

Fig. 2

Fig.3